# EUROPEAN PATENT APPLICATION

(11) **EP 3 758 409 A1**
(43) Date of publication of application: **30.12.2020**
(21) Application number: 18910881.4
(22) Date of filing: 27.11.2018
(51) Int. Cl.: H04W 28/08, H04W 28/02, H04W 24/08, H04L 12/803, H04L 12/26

(54) **DATA TRAFFIC PROCESSING METHOD AND RELATED NETWORK DEVICE**

(30) Priority: 22.03.2018 CN 201810244236
(71) Applicant: Huawei Technologies Co., Ltd., Longgang District Shenzhen, Guangdong 518129 (CN)
(72) Inventor: CHEN, Lihao, Shenzhen Guangdong 518129 (CN); ZHANG, Mingui, Shenzhen Guangdong 518129 (CN)
(74) Representative: Pfenning, Meinig & Partner mbB
(86) International application number: PCT/CN2018/117555
(87) International publication number: WO 2019/179157

(57) **Abstract**

This application discloses a data traffic processing method. The data traffic processing method is applied to a hybrid access network. The hybrid access network includes a first network device and a second network device. The first network device is connected to the second network device by using a first link and a second link. The method includes: first determining, by the first network device, whether a first total rate at which data flows are sent by using the first link is greater than bandwidth of the first link; and when determining that the first total rate at which the data flows are sent by using the first link is greater than the bandwidth of the first link, determining, by the first network device, a first data flow, where a first rate at which the first data flow is sent is less than or equal to a first remaining bandwidth of the second link, and the first remaining bandwidth indicates an available bandwidth that is in the second link and that is not occupied by a data flow; and finally, switching, by the first network device, the first data flow from the first link to the second link. Therefore, data flow load between network devices can be dynamically adjusted, and this helps improve bandwidth utilization of a link.

## Description

This application claims priority to Chinese Patent Application No. 201810244236.8, filed with the Chinese Patent Office on March 22, 2018 and entitled "DATA TRAFFIC PROCESSING METHOD AND RELATED NETWORK DEVICE", which is incorporated herein by reference in its entirety.

### TECHNICAL FIELD

This application relates to the communications field, and in particular, to a data traffic processing method and a related network device.

### BACKGROUND

A hybrid access (hybrid access) network allows a user to access the Internet in different access modes. The hybrid access network includes a home gateway (HG, home gateway) and a hybrid access aggregation point (HAAP, hybrid access aggregation point). By using the HAAP, a user of each HG is bound with different access modes to access a network in a hybrid access mode. The different access modes may include modes such as a digital subscriber line (DSL, digital subscriber line) and long term evolution (LTE, long term evolution).

In the hybrid access network, the user performs dialup through the HG to establish bound tunnels (namely, an LTE tunnel and a DSL tunnel) with the HAAP, and transmits data through the tunnels. After the two tunnels are established between the HG and the HAAP, a dual-tunnel bounding mode is automatically enabled and service traffic of the user is distributed packet by packet. In other words, packets in one traffic flow may be sent to different tunnels for transmission.

Because transmission delays on the tunnels are different, the packets may have a delay difference when arriving at a receive end through the tunnels. When any one of the bound tunnels is congested, a packet that has arrived at the receive end through the other tunnel needs to wait. Consequently, a transmission delay of one link affects an entire transmission process, overall throughput of the tunnels is reduced, and even a packet loss may occur due to a buffer overflow in a serious case.

### SUMMARY

This application provides a data traffic processing method, to dynamically adjust data flow load between network devices by monitoring bandwidth of a link environment and a transmission rate of a data flow, thereby helping improve bandwidth utilization of a link between the network devices.

According to a first aspect of the present invention, a data traffic processing method is provided. The method may be applied to a hybrid access network. The hybrid access network includes a first network device and a second network device. The first network device is connected to the second network device by using a first link and a second link. The method includes:
determining, by the first network device, whether a first total rate at which data flows are sent by using the first link is greater than bandwidth of the first link, where the first network device sends a plurality of data flows to the second network device by using the first link, the first total rate indicates a sum of rates at which the first network device sends all of the plurality of data flows, the rate of each data flow is a sending rate required by the data flow when the first network device sends the data flow, and when sending the data flow, the first network device sends the data flow based on the sending rate required by the data flow;
when the first network device determines that the first total rate at which the data flows are sent by using the first link is greater than the bandwidth of the first link, which indicates that the bandwidth of the first link cannot bear transmission of all the data flows on the link at an expected rate, first determining, by the first network device, a first data flow on which traffic distribution adjustment needs to be performed, where a first rate at which the first network device sends the first data flow is less than or equal to a first remaining bandwidth of the second link, the first remaining bandwidth indicates an available bandwidth that is in the second link and that is not occupied by a data flow, and therefore, if a data flow is occupied in the second link, a transmission rate of the data flow is subtracted from a link bandwidth to obtain a remaining bandwidth, and the link bandwidth may also be referred to as a rated bandwidth or a maximum available bandwidth of the first link; and where
the first data flow may be determined in a plurality of manners, and two manners are described herein: 1, determining a remaining bandwidth of the second link first, and then selecting the first data flow based on the remaining bandwidth of the second link and a screening condition; and 2, rearranging sending rates of all the data flows on the first link and remaining bandwidths of remaining links, and then substituting a rearrangement result into the condition to select both the first data flow and the second link; and
switching, by the first network device, the first data flow from the first link to the second link after first determining the first data flow.

In this embodiment of this application, load balancing may be dynamically adjusted by comparing a sum of transmission rates of all data flows on a link with a link bandwidth, to adjust a data flow on a congested link to a relatively idle link. This helps improve bandwidth utilization of a link between network devices, reduces link congestion to some extent, and also improves flexibility of data transmission.

After the first data flow on the first link is switched to the second link, congestion of the first link is improved.

The first network device continues to determine whether a total rate at which the data flows are sent by using the first link is greater than the bandwidth of the first link. If the first network device determines that the total rate at which the data flows are sent by using the first link is still greater than the bandwidth of the first link, the first network device may adjust a second data flow on the first link according to the foregoing implementation.

With reference to the first aspect of the embodiments of this application, in a first implementation of the first aspect of the embodiments of this application, the method further includes:
determining, by the first network device, whether a second total rate at which the data flows are sent by using the first link is greater than the bandwidth of the first link, where the second total rate indicates a sum of rates at which the first network device sends all data flows other than the first data flow in the plurality of data flows, in other words, the second total rate is a sum of expected rates of all the data flows other than the first data flow on the first link;
determining, by the first network device, a second data flow when the first network device determines that the second total rate at which the data flows are sent by using the first link is greater than the bandwidth of the first link, where the plurality of data flows include the second data flow, a second rate at which the first network device sends the second data flow is less than or equal to a second remaining bandwidth of the second link, and because the first data flow is switched to the second link during the first adjustment, the second remaining bandwidth is equal to the first remaining bandwidth minus the first rate; and
switching, by the first network device, the second data flow from the first link to the second link.

In this embodiment of this application, after load balancing is dynamically adjusted for the first time, whether the link is still congested is determined again, in other words, whether the second total rate of the first link is greater than the bandwidth of the link is determined. If the second total rate of the first link is greater than the bandwidth of the link, adjustment continues. This helps further improve link utilization and reduce link congestion.

With reference to the first aspect of the embodiments of this application, in a second implementation of the first aspect of the embodiments of this application, the first network device is also connected to the second network device by using a third link, and the method further includes:
determining, by the first network device, whether a second total rate at which the data flows are sent by using the first link is greater than the bandwidth of the first link, where the second total rate indicates a sum of rates at which the first network device sends all data flows other than the first data flow in the plurality of data flows;
when the first network device determines that the second total rate at which the data flows are sent by using the first link is greater than the bandwidth of the first link, determining, by the first network device, a third data flow, where the plurality of data flows include the third data flow, a third rate at which the first network device sends the third data flow is less than or equal to a third remaining bandwidth of the third link, and the third remaining bandwidth indicates an available bandwidth that is in the third link and that is not occupied by a data flow; and
switching, by the first network device, the third data flow from the first link to the third link.

It may be understood that in this embodiment of this application, in addition to a case in which there are two links, in a case there are a plurality of links, the third data flow may be determined from the first link, so that the third rate at which the first network device sends the third data flow is less than or equal to the third remaining bandwidth of the third link. In this solution, traffic distribution may be performed on the first link provided that there is a remaining bandwidth that can bear a distributed data flow. This helps reduce congestion of the first link and improve bandwidth utilization of a link other than the first link.

With reference to the first aspect of the embodiments of this application to the second implementation of the first aspect, in a third implementation of the first aspect of the embodiments of this application, the first rate at which the first network device sends the first data flow is less than or equal to the first remaining bandwidth of the second link, and the method further includes:
the first rate at which the first network device sends the first data flow is less than or equal to a difference between a value of the first remaining bandwidth and a first threshold, the first threshold indicates a security value of switching a data flow, and the first threshold helps avoid congestion after a link receives an adjusted data flow.

When a security margin is introduced, the two methods that are mentioned in the foregoing implementations and that are used for determining the first data flow and the second link only need to be simply changed, in other words, the screening condition is changed to that the first rate at which the first network device sends the first data flow is less than or equal to the difference between the value of the first remaining bandwidth and the first threshold.

In this embodiment, introducing the security margin helps avoid congestion after a link receives an adjusted data flow.

With reference to the first aspect of the embodiments of this application to the third implementation of the first aspect, in a fourth implementation of the first aspect of the embodiments of this application, the method further includes:
sending, by the first network device, a request packet to the second network device by using the first link, where the request packet includes a link identifier, the link identifier indicates the first link, and when the first network device sends only two request packets to the second network device, an attribute value field of the request packet includes only the link identifier, to achieve an expected effect in this solution;
receiving, by the first network device by using the first link, a response packet that is of the request packet and that is from the second network device, where the response packet includes a quantity of received packets, a quantity of received bytes, and a receiving period, the receiving period indicates a difference between a time point at which the second network device receives the request packet and a time point at which the second network device receives a previous request packet of the request packet, the quantity of the received packets indicates a quantity of data packets received by the second network device in the receiving period, and the quantity of the received bytes indicates a quantity of bytes included in the data packets received by the second network device in the receiving period;
determining, by the first network device, a packet loss rate and a transmission rate of the first link based on the response packet; and
updating, by the first network device, the bandwidth of the first link based on the packet loss rate and the transmission rate.

In this embodiment of this application, load balancing between network devices may be implemented based on a newly defined control packet format and a link bandwidth detection mechanism. In other words, a delay, a packet loss, and the like of a link can be measured in real time by sending a control packet, to detect a link bandwidth.

With reference to the fourth implementation of the first aspect of the embodiments of this application, in a fifth implementation of the first aspect of the embodiments of this application, the determining, by the first network device, a packet loss rate and a transmission rate of the first link based on the response packet includes:
determining, by the first network device, a quantity of sent packets in a sending period between sending the request packet and a previous request packet of the request packet;
determining, by the first network device, the packet loss rate based on the quantity of the sent packets and the quantity of the received packets, where it may be understood that when the quantity of the sent packets is equal to the quantity of the received packets, the packet loss rate is 0, and when the quantity of the sent packets is not equal to the quantity of the received packets, the packet loss rate is not 0; and
determining, by the first network device, the transmission rate based on the quantity of the received bytes and the receiving period.

The packet loss rate and the packet transmission rate may be determined by comparing a packet status in a sending process with a packet status in a receiving process, to monitor communication quality of the link, and lay a foundation for subsequent bandwidth optimization and update.

With reference to the fourth implementation or the fifth implementation of the first aspect of the embodiments of this application, in a sixth implementation of the first aspect of the embodiments of this application, the updating, by the first network device, the bandwidth of the first link based on the packet loss rate and the transmission rate includes:
updating, by the first network device, a value of the bandwidth of the first link to a value of the transmission rate when the packet loss rate is not zero, or when the packet loss rate is zero and the transmission rate is greater than the bandwidth of the first link; or
maintaining, by the first network device, a value of the bandwidth of the first link when the packet loss rate is zero and the transmission rate is less than or equal to the bandwidth of the first link.

The bandwidth of the link may be optimized and updated based on the packet loss rate and the transmission rate, so that bandwidth utilization of the link is improved, and congestion is also reduced.

With reference to the fourth implementation to the sixth implementation of the first aspect of the embodiments of this application, in a seventh implementation of the first aspect of the embodiments of this application, the request packet further includes a sequence number, the sequence number indicates the request packet, and the response packet includes the sequence number.

When the first network device sends only two request packets to the second network device, this solution can also be implemented if the attribute value field of the request packet includes only the link identifier. However, when the first network device periodically sends a large quantity of request packets, the attribute value field of the request packets needs to include the link identifier and the sequence number, and the sequence number is used to identify a sequence of the packets.

With reference to the first aspect of the embodiments of this application to the seventh implementation of the first aspect, in an eighth implementation of the first aspect of the embodiments of this application, the method further includes:
determining, by the first network device, whether a difference between a delay of the first link and a delay of the second link is less than a second threshold; and
when determining that the difference between the delay of the first link and the delay of the second link is less than the second threshold, sending, by the first network device, a first data packet to the second network device by using the first link, and sending a second data packet to the second network device by using the second link, where the first data flow includes the first data packet and the second data packet.

In this embodiment of this application, whether to use a per-flow load balancing mode or a per-packet load balancing mode may be flexibly determined by determining a delay difference between tunnels. This provides a plurality of possibilities for the solution, so that each load balancing mode can maximize an advantage in different cases, to improve an overall transmission rate.

With reference to the first aspect of the embodiments of this application to the eighth implementation of the first aspect, in a ninth implementation of the first aspect of the embodiments of this application, the first network device is a home gateway HG device, and the second network device is a hybrid access aggregation point HAAP device; or the first network device is an HAAP device, and the second network device is an HG device.

Types of the first network device and the second network device are not specifically limited in this solution, and the first network device and the second network device are applicable between any network devices that transmit data flows. This reflects universality and practicability of the solution of this embodiment.

According to a second aspect of the present invention, a first network device is provided. The first network device is applied to a hybrid access network. The hybrid access network further includes a second network device. The first network device is connected to the second network device by using a first link and a second link. The first network device includes a processing module and a sending module.

The sending module is configured to send a plurality of data flows to the second network device by using the first link.

The processing module is configured to determine whether a first total rate at which the data flows are sent by using the first link is greater than bandwidth of the first link, where the first total rate indicates a sum of rates of all of the plurality of data flows sent by the sending module.

When the processing module determines that the first total rate at which the data flows are sent by using the first link is greater than the bandwidth of the first link, the processing module is further configured to determine a first data flow, where the plurality of data flows include the first data flow, a first rate at which the sending module sends the first data flow is less than or equal to a first remaining bandwidth of the second link, and the first remaining bandwidth indicates an available bandwidth that is in the second link and that is not occupied by a data flow.

The processing module is further configured to switch the first data flow from the first link to the second link.

In this embodiment of this application, load balancing may be dynamically adjusted by comparing a sum of transmission rates of all data flows on a link with a link bandwidth, to adjust a data flow on a congested link to a relatively idle link. This helps improve bandwidth utilization of a link between network devices, reduces link congestion to some extent, and also improves flexibility of data transmission.

With reference to the second aspect of the embodiments of this application, in a first implementation of the second aspect of the embodiments of this application, the first network device includes:
the processing module is further configured to determine whether a second total rate at which the data flows are sent by using the first link is greater than the bandwidth of the first link, where the second total rate indicates a sum of rates of all data flows other than the first data flow in the plurality of data flows sent by the sending module;
when the processing module determines that the second total rate at which the data flows are sent by using the first link is greater than the bandwidth of the first link, the processing module is further configured to determine a second data flow, where the plurality of data flows include the second data flow, the second rate of the second data flow sent by the sending module is less than or equal to a second remaining bandwidth of the second link, and a value of the second remaining bandwidth is equal to a difference between a value of the first remaining bandwidth and a value of the first rate; and
the processing module is further configured to switch the second data flow from the first link to the second link.

In this embodiment of this application, after load balancing is dynamically adjusted for the first time, whether the link is still congested is determined again, in other words, whether the second total rate of the first link is greater than the bandwidth of the link is determined. If the second total rate of the first link is greater than the bandwidth of the link, adjustment continues. This helps further improve link utilization and reduce link congestion.

With reference to the second aspect of the embodiments of this application, in a second implementation of the second aspect of the embodiment of this application, the first network device is further connected to the second network device by using a third link;
the processing module is further configured to determine whether a second total rate at which the data flows are sent by using the first link is greater than the bandwidth of the first link, where the second total rate indicates a sum of rates of all data flows other than the first data flow in the plurality of data flows sent by the sending module;
when the processing module determines that the second total rate at which the data flows are sent by using the first link is greater than the bandwidth of the first link, the processing module is further configured to determine a third data flow, where the plurality of data flows include the third data flow, a third rate of the third data flow sent by the sending module is less than or equal to a third remaining bandwidth of the third link, and the third remaining bandwidth indicates an available bandwidth that is in the third link and that is not occupied by a data flow; and
the processing module is further configured to switch the third data flow from the first link to the third link.

It should be understood that in this solution, in addition to a case in which there are two links, in a case there are a plurality of links, the third data flow may be determined from the first link, so that the third rate at which the first network device sends the third data flow is less than or equal to the third remaining bandwidth of the third link. In this solution, traffic distribution may be performed on the first link provided that there is a remaining bandwidth that can bear a distributed data flow. This helps reduce congestion of the first link and improve bandwidth utilization of a link other than the first link.

With reference to the second aspect of the embodiments of this application to the second implementation of the second aspect, in a third implementation of the second aspect of the embodiments of this application, that the first rate of the first data flow sent by the sending module is less than or equal to the first remaining bandwidth of the second link specifically includes:
the first rate of the first data flow sent by the sending module is less than or equal to a difference between the value of the first remaining bandwidth and a first threshold, and the first threshold indicates a security value of switching a data flow.

In this embodiment, introducing a security margin helps avoid congestion after a link receives an adjusted data flow.

With reference to the second aspect of the embodiments of this application to the third implementation of the second aspect, in a fourth implementation of the second aspect of the embodiments of this application, the first network device further includes a receiving module.

The sending module is further configured to send a request packet to the second network device by using the first link, where the request packet includes a link identifier, and the link identifier indicates the first link.

The receiving module is configured to receive, by using the first link, a response packet that is of the request packet and that is from the second network device, where the response packet includes a quantity of received packets, a quantity of received bytes, and a receiving period, the receiving period indicates a difference between a time point at which the second network device receives the request packet and a time point at which the second network device receives a previous request packet of the request packet, the quantity of the received packets indicates a quantity of data packets received by the second network device in the receiving period, and the quantity of the received bytes indicates a quantity of bytes included in the data packets received by the second network device in the receiving period.

The processing module is further configured to determine a packet loss rate and a transmission rate of the first link based on the response packet.

The processing module is further configured to update the bandwidth of the first link based on the packet loss rate and the transmission rate.

In this embodiment of this application, load balancing between network devices may be implemented based on a newly defined control packet format and a link bandwidth detection mechanism. In other words, a delay, a packet loss, and the like of a link can be measured in real time by sending a control packet, to detect a link bandwidth.

With reference to the fourth implementation of the second aspect of the embodiments of this application, in a fifth implementation of the second aspect of the embodiments of this application, that the processing module determines the packet loss rate and the transmission rate of the first link based on the response packet specifically includes:
the processing module is further configured to determine a quantity of sent packets in a sending period between sending the request packet and sending the previous request packet of the request packet;
the processing module is further configured to determine the packet loss rate based on the quantity of the sent packets and the quantity of the received packets; and
the processing module is further configured to determine the transmission rate based on the quantity of received bytes and the receiving period.

The packet loss rate and the packet transmission rate may be determined by comparing a packet status in a sending process with a packet status in a receiving process, to monitor communication quality of the link, and lay a foundation for subsequent bandwidth optimization and update.

With reference to the fourth implementation or the fifth implementation of the second aspect of the embodiments of this application, in a sixth implementation of the second aspect of the embodiments of this application, that the processing module updates the bandwidth of the first link based on the packet loss rate and the transmission rate specifically includes:
the processing module is further configured to update a value of the bandwidth the first link to a value of the transmission rate when the packet loss rate is not zero, or when the packet loss rate is zero and the transmission rate is greater than the bandwidth of the first link; and
the processing module is further configured to maintain the value of the bandwidth the first link when the packet loss rate is zero and the transmission rate is less than or equal to the bandwidth of the first link.

The bandwidth of the link may be optimized and updated based on the packet loss rate and the transmission rate, so that bandwidth utilization of the link is improved, and congestion is also reduced.

With reference to the second aspect of the embodiments of this application to the seventh implementation of the second aspect, in an eighth implementation of the second aspect of the embodiments of this application, the first network device includes:
the processing module is further configured to determine whether a difference between a delay of the first link and a delay of the second link is less than a second threshold; and
when the processing module determines that the difference between the delay of the first link and the delay of the second link is less than the second threshold, the sending module is further configured to send a first data packet to the second network device by using the first link and send a second data packet to the second network device by using the second link, where the first data flow includes the first data packet and the second data packet.

In this embodiment of this application, whether to use a per-flow load balancing mode or a per-packet load balancing mode may be flexibly determined by determining a delay difference between tunnels. This provides a plurality of possibilities for the solution, so that each load balancing mode can maximize an advantage in different cases, to improve an overall transmission rate.

According to a third aspect of the present invention, a data traffic processing system is provided. The data traffic processing system includes a first network device and a second network device, and the first network device and the second network device are devices in a hybrid access network. The data traffic processing system includes:
the first network device determines whether a first total rate at which data flows are sent by using the first link is greater than bandwidth of the first link, where the first network device sends a plurality of data flows to the second network device by using the first link, and the first total rate indicates a sum of rates at which the first network device sends all of the plurality of data flows;
the second network device receives the plurality of data flows sent by the first network device;
the first network device determines a first data flow when determining that the first total rate at which the data flows are sent by using the first link is greater than the bandwidth of the first link, where the plurality of data flows include the first data flow, a first rate at which the first network device sends the first data flow is less than or equal to a first remaining bandwidth of the second link, and the first remaining bandwidth indicates an available bandwidth that is in the second link and that is not occupied by a data flow;
the first network device switches the first data flow from the first link to the second link; and
the second network device receives the first data flow by using the second link.

With reference to the third aspect of the embodiments of this application, in another implementation of the third aspect of the embodiments of this application, the data traffic processing system further includes:
the first network device sends a request packet to the second network device by using the first link, where the request packet includes a link identifier, and the link identifier indicates the first link;
the second network device receives, by using the first link, the request packet sent by the first network device;
the second network device sends a response packet by using the first link, where the response packet includes a quantity of received packets, a quantity of received bytes, and a receiving period, the receiving period indicates a difference between a time point at which the second network device receives the request packet and a time point at which the second network device receives a previous request packet of the request packet, the quantity of the received packets indicates a quantity of data packets received by the second network device in the receiving period, and the quantity of the received bytes indicates a quantity of bytes included in the data packets received by the second network device in the receiving period;
the first network device receives, by using the first link, the response packet that is of the request packet and that is from the second network device;
the first network device determines a packet loss rate and a transmission rate of the first link based on the response packet; and
the first network device updates the bandwidth of the first link based on the packet loss rate and the transmission rate.

The data traffic processing system may be further configured to perform the implementation according to any one of the second aspect of the embodiments of this application to the eighth implementation of the second aspect.

It can be learned from the foregoing technical solutions that this application has the following advantages:
In the embodiments of this application, bandwidth of a link environment and a transmission rate of a packet are monitored, to implement dynamic adjustment of data flow load between network devices. In other words, a traffic flow on a congested link can be properly adjusted to a relatively idle link based on congestion, and this can reduce link congestion to some extent, and help improve bandwidth utilization of a link between the network devices.

### BRIEF DESCRIPTION OF DRAWINGS

FIG. 1 is a network topology diagram of a hybrid access network according to an embodiment of this application;
FIG. 2 is an encapsulation format of a conventional data packet in a GRE bound tunnel according to an embodiment of this application;
FIG. 3 is an encapsulation format of a conventional control packet in a GRE bound tunnel according to an embodiment of this application;
FIG. 4 is a per-packet load balancing mode according to an embodiment of this application;
FIG. 5 is a schematic diagram of an embodiment of a data traffic processing method according to an embodiment of this application;
FIG. 6 is a schematic diagram of another embodiment of a data traffic processing method according to an embodiment of this application;
FIG. 7 is a schematic diagram of a scenario of a data traffic processing method according to an embodiment of this application;
FIG. 8 is a schematic flowchart of a link bandwidth detection mechanism according to an embodiment of this application;
FIG. 9 is a schematic diagram of an embodiment of interaction between a first network device and a second network device according to an embodiment of this application;
FIG. 10 is a schematic diagram of sending a control packet between a first network device and a second network device according to an embodiment of this application;
FIG. 11 is a newly defined encapsulation format of a request packet in a GRE bound tunnel according to an embodiment of this application;
FIG. 12 is a newly defined encapsulation format of a response packet in a GRE bound tunnel according to an embodiment of this application;
FIG. 13 is a schematic diagram of an embodiment of a first network device according to an embodiment of this application;
FIG. 14 is a schematic diagram of another embodiment of a first network device according to an embodiment of this application; and
FIG. 15 is a schematic diagram of still another embodiment of a first network device according to an embodiment of this application.

### DESCRIPTION OF EMBODIMENTS

This application provides a data traffic processing method, to dynamically adjust data flow load between network devices. In other words, a data flow on a congested link can be properly adjusted to a relatively idle link based on congestion, and this can reduce link congestion to some extent, and help improve bandwidth utilization of a link between the network devices.

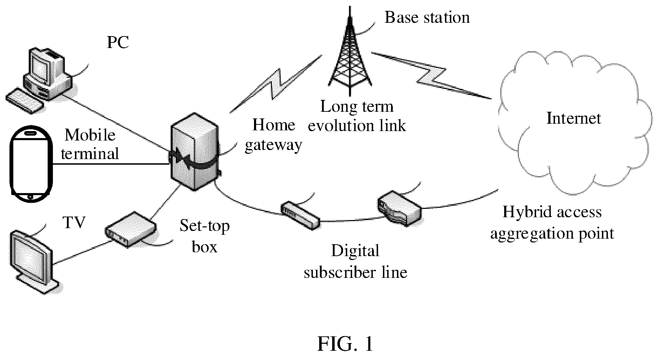

FIG. 1 is a network topology diagram of a hybrid access network, and may be applied to data transmission between a hybrid access aggregation point (HAAP, hybrid access aggregation point) and a home gateway (HG, home gateway). The HG may be a router or a layer 3 switch, and may be connected to a user terminal. The user terminal may specifically include at least one of the following devices: a mobile terminal, a personal computer, an internet protocol television (IPTV, Internet Protocol television), or the like. A hybrid access network may be implemented based on a plurality of different types of hybrid access modes, such as a digital subscriber line (DSL, digital subscriber line) and long term evolution (LTE, long term evolution). An LTE link may be connected to a core network by using a base station, and a DSL link establishes communication transmission between the HG and the HAAP by using a DSL access multiplexer and a broadband network gateway.

A hybrid access network is implemented between the HG and the HAAP through generic routing encapsulation (GRE, Generic Routing Encapsulation) tunnel bonding (Tunnel Bonding). The GRE tunnel bonding is to bond a transmission link between the HG and the HAAP as a GRE bound tunnel based on a GRE protocol. In an implementation of this application, an example in which the LTE link and the DSL link are included between the HG and the HAAP is used for description, as shown in FIG. 1. It should be understood that the HG and the HAAP are not limited to the foregoing two link forms, for example, a third generation (3G, Third Generation) link, a fifth generation (5G, 5th Generation) link, or a fiber optic connection (fibre optic connection) link may be further included.

The HG encapsulates a data packet into a GRE packet based on the GRE protocol, and sends the GRE packet to the HAAP by using the DSL link; or the HAAP encapsulates a data packet into a GRE packet based on the GRE protocol, and sends the GRE packet to the HG by using the DSL link. Therefore, in this embodiment of this application, the DSL link may also be referred to as a DSL GRE tunnel. The HG encapsulates a data packet into a GRE packet based on the GRE protocol, and sends the GRE packet to the HAAP by using the LTE link; or the HAAP encapsulates a data packet into a GRE packet based on the GRE protocol, and sends the GRE packet to the HG by using the LTE link. Therefore, in this embodiment of this application, the LTE link may also be referred to as an LTE GRE tunnel. The DSL GRE tunnel and the LTE GRE tunnel are bound as a GRE bound tunnel. Therefore, in this implementation of this application, the GRE bound tunnel includes the DSL GRE tunnel and the LTE GRE tunnel.

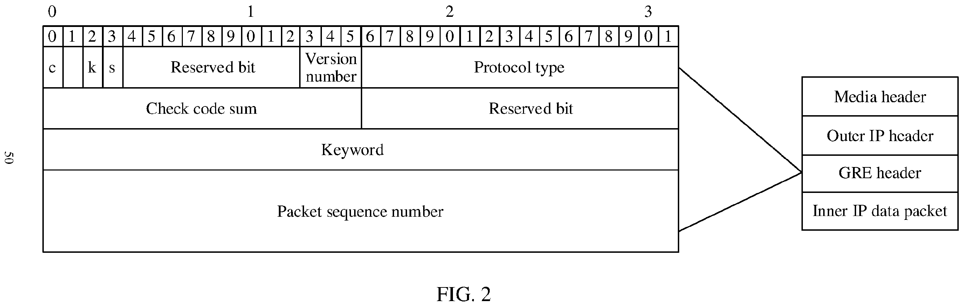

A data packet and a control packet transmitted on the GRE bound tunnel each have a specific encapsulation format. The encapsulation format of the data packet is shown in FIG. 2, and includes a media header, an outer internet protocol (IP, internet protocol) header, a GRE header, and an inner IP data packet. Fields in the GRE header include a flag bit (such as, c, k, and s), a reserved bit (Reserved), a version number (ver), a protocol type (Protocol Type), a checksum (checksum), a keyword (key), and a packet sequence number (sequence number). For a detailed meaning of each field, refer to a request for comments (RFC, request for comments) 8157 of the internet engineering task force (IETF, Internet Engineering Task Force).

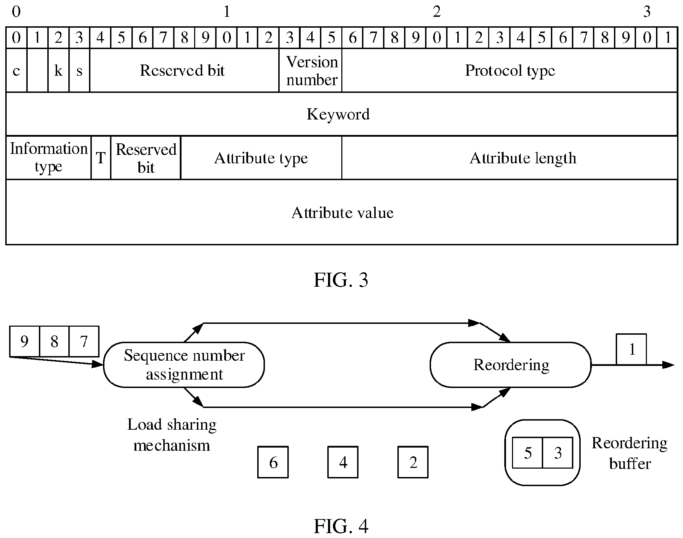

FIG. 3 shows an encapsulation format of a GRE tunnel bonding control packet. A standard GRE header includes a flag bit, a reserved bit, a version number, a protocol type, a keyword, a message type (MsgType), an attribute type (Attribute Type), an attribute length (Attribute length), an attribute value (Attribute Value), and the like. For a meaning of each field, refer to the RFC 8157.

This embodiment of this application implements a data traffic processing method. A data flow is essentially a digitally coded signal sequence for transmitting information. The data flow can be classified into a video data flow, a text data flow, a voice data flow, and the like based on service types. The data flow can also be classified into a low-priority data flow and a high-priority data flow based on service priorities. Therefore, the data flow is a set of a plurality of data packets with a same feature attribute, and may include a plurality of data packets. The data flow further includes a flow identifier, and the flow identifier is used to identify the data flow. In this application, the data flow may also be referred to as a traffic flow.

Based on the foregoing application scenario, transmission data may be transmitted in a per-packet load balancing mode, to be specific, load balancing is performed based on a packet, and packets in one data flow are sent to different links for transmission. For example, a first packet is transmitted by using a first link, a second packet is transmitted by using a second link, and the first packet and the second packet belong to a same data flow. A specific method is shown in FIG. 4: At a transmit end, a sequence number (sequence number) is allocated to each packet, and the sequence number is bound to a tunnel. By using a load balancing mechanism, a network device determines to allocate a current packet to a tunnel, and then the packet is transmitted through the tunnel. Packets transmitted through different tunnels arrive at a receive end in different sequences. Therefore, the receive end buffers a first incoming packet to combine it with later incoming packets, and then reorders all the packets based on the sequence numbers of the packets. The per-packet load balancing mode provides a high bandwidth when a network status is in good. However, when the network status is poor and a transmission delay difference between different tunnels is relatively large, because the receive end needs a large amount of time waiting for aggregation of all the packets. This mode reduces an overall throughput of a bound tunnel, and even causes a buffer overflow, to further cause a problem that a packet is discarded and retransmission is triggered at an application layer.

For the defect of the per-packet load balancing mode when the network status is poor, an embodiment of this application provides a data traffic processing method based on per-flow load balancing. The data traffic processing method may be applied to a hybrid access network. The hybrid access network includes a first network device and a second network device. The first network device is connected to the second network device by using a first link and a second link. When an HG is a first network device at a transmit end, an HAAP is a second network device at a receive end. When the HAAP is the first network device at the transmit end, the HG is the second network device at the receive end. In an implementation of this application, a DSL link and an LTE link are used as an example for description. For example, the first link is the DSL link, and the second link is the LTE link. Alternatively, the first link is the LTE link, and the second link is the DSL link.

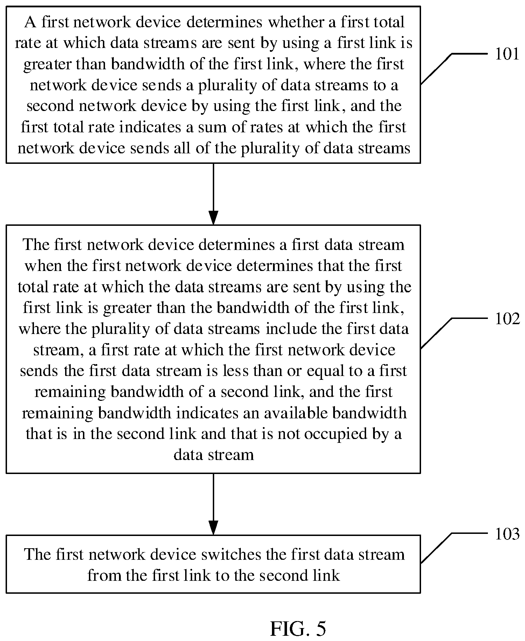

A per-flow load balancing mode refers to performing transmission based on a data flow, in other words, a plurality of current data flows of a user are distributed to different links of a bound tunnel. For example, a first data flow and a second data flow are transmitted by using the first link, and a third data flow and a fourth data flow are transmitted by using the second link. When a total rate of data flows carried on any link exceeds a configured bandwidth of the link or the link is congested, a data flow of the user on the link is selected and reallocated to another most appropriate link. FIG. 5 is a schematic flowchart of the data traffic processing method according to this embodiment of this application. The method includes the following steps.

101: The first network device determines whether a first total rate at which data flows are sent by using the first link is greater than bandwidth of the first link, where the first network device sends a plurality of data flows to the second network device by using the first link, and the first total rate indicates a sum of rates at which the first network device sends all of the plurality of data flows.

The first network device may send the plurality of data flows to the second network device by using the first link. The first total rate indicates the sum of the rates at which the first network device sends all of the plurality of data flows. The rate of each data flow in the plurality of data flows is a sending rate required for the data flow when the first network device sends the data flow. When sending the data flow, the first network device sends the data flow based on a sending rate required for the data flow. However, an actual transmission rate of the data flow on the first link depends on whether the first link can provide sufficient bandwidth. If the first link cannot provide sufficient bandwidth, the actual transmission rate may be less than the sending rate required for the data flow. A bandwidth indicates a maximum amount of data that passes in a unit time. The bandwidth of the first link represents a maximum amount of data that passes through a cross-sectional area of the first link in a unit time. The bandwidth of the first link may also be referred to as a rated bandwidth or a maximum available bandwidth of the first link.

102: The first network device determines a first data flow when determining that the first total rate at which the data flows are sent by using the first link is greater than the bandwidth of the first link, where the plurality of data flows include the first data flow, a first rate at which the first network device sends the first data flow is less than or equal to a first remaining bandwidth of the second link, and the first remaining bandwidth indicates an available bandwidth that is in the second link and that is not occupied by a data flow.

First, the first network device needs to compare a sum of expected transmission rates of all the data flows on the link with a value of the bandwidth the link. When the first network device determines that the sum of the transmission rates of all the data flows on the first link is greater than the bandwidth of the link, it indicates that the link cannot bear such heavy traffic. In this case, the first network device needs to determine the first data flow, and the first rate at which the first data flow is sent is less than or equal to the first remaining bandwidth of the second link. The first remaining bandwidth refers to a remaining available bandwidth that is not occupied by a data flow other than the bandwidth occupied by data flows in the second link. Therefore, if a data flow in the second link is occupied, a remaining bandwidth is obtained by subtracting a transmission rate of the data flow from a link bandwidth. For a specific implementation, refer to the descriptions of the implementation of the link bandwidth detection mechanism in the embodiments of this application. Details are not described herein again.

In this embodiment of this application, there are a plurality of methods for determining the first data flow and the second link. Only two solutions are specifically described herein.

First solution: When the sum of the transmission rates of all the data flows on the first link is greater than the bandwidth of the link, the remaining bandwidth of the second link is first determined, and then the first data flow on the first link is determined based on the remaining bandwidth of the second link and a screening condition. The first rate at which the first data flow is sent needs to be less than or equal to the first remaining bandwidth of the second link.

### Second solution:

In this embodiment of this application, when detecting that the sum of the transmission rates of all the data flows on the first link is greater than the bandwidth of the link, the first network device may select both the first data flow and the second link in a permutation and combination mode: permutation and combination are performed on the transmission rates of all the data flows on the first link and remaining bandwidths of all remaining links, to select the first data flow and the second link that meet the condition. Each remaining link refers to a link between the HG and the HAAP other than the first link.

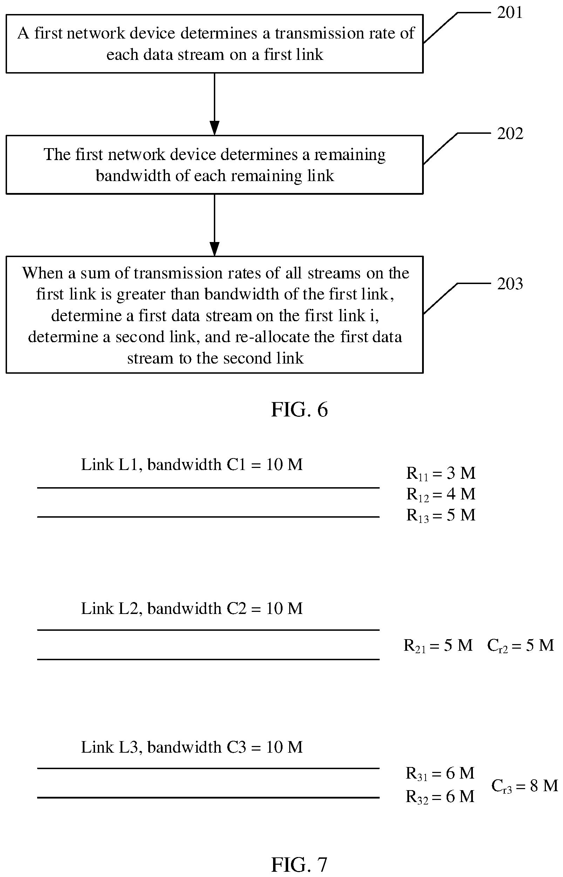

Specifically, as shown in FIG. 6, FIG. 6 is a schematic flowchart of a data traffic processing method according to an embodiment of this application.

It is assumed that i links in total (Li, L2, L3, ..., Li) participate in multipath transmission, and there are j flows (Fᵢ₁, Fᵢ₂, ..., Fij) on a link i, where i and j are positive integers.

201: A first network device determines a transmission rate of each data flow on a first link.

The transmission rate is a sending rate required for the data flow. A transmission rate of a jth flow on the link i may be denoted as Rij.

202: The first network device determines a remaining bandwidth of each remaining link.

The first network device needs to determine the remaining bandwidth of each remaining link (excluding the first link). If the first network device knows bandwidth of a link (the bandwidth may be a rated bandwidth of a transmission link or a bandwidth allocated to an access network device), the first network device may directly determine the bandwidth. If the bandwidth is not configured, a link bandwidth may be determined with reference to the implementation of the link bandwidth detection mechanism in the embodiments of this application. When a data flow occupies the link bandwidth, the remaining bandwidth is equal to the link bandwidth minus a transmission rate of the occupying data flow. When no data flow occupies the link bandwidth, the remaining bandwidth is the link bandwidth.

203. When a sum of transmission rates of all flows on the first link is greater than bandwidth of the first link (namely, ∑Rᵢⱼ>Cᵢ), determine a first data flow and a second link on the first link i, and re-allocate the first data flow to the second link.

Specifically, as shown in FIG. 7, it is assumed that there are three links: L1 (C1 = 10 M), L2 (C2 = 10 M), and L3 (C3 = 10 M), and a sum of rates of all data flows on the link L1 is ∑R₁ = 12 M > C₁ = 10 M, in other words, a traffic overflow occurs. In this case, one data flow needs to be selected from three flows F₁₁, F₁₂, and F₁₃ on the L1 and allocated to another link, namely, L2 or L3, until ∑Rᵢⱼ ≤ Cᵢ.

The first network device determines that the transmission rates of all the flows on the first link L1 are R₁₁ = 3 M, R₁₂ = 4 M, and R₁₃ = 5 M. In addition, the first network device determines that bandwidths of all the links are C1 = 10 M, C2 = 10 M, C3 = 10 M. Then, the first network device performs permutation and combination on the transmission rates of all the data flows on the first link and remaining bandwidths of the remaining links, and separately substitutes the transmission rates and the remaining bandwidths into C_{ry} - Rᵢₓ ≥ 0, where C_{ry} indicates bandwidth of a yₜₕ link in the remaining links, and Rᵢₓ is an Xth traffic flow transmitted by using the first link. The first network device determines that Rᵢₓ and C_{ry} that meet C_{ry} - Rᵢₓ ≥ 0 and are closest to 0 are the first data flow and the second link. After calculation, it is learned that the flow F₁₂ needs to be allocated to the link L2. After the adjustment, no traffic overflow occurs on the three links.

103: The first network device switches the first data flow from the first link to the second link.

In this embodiment of this application, load balancing may be dynamically adjusted by comparing a sum of transmission rates of all data flows on a link with a link bandwidth, to adjust a data flow on a congested link to a relatively idle link. This helps improve bandwidth utilization of a link between network devices, reduces link congestion to some extent, and also improves flexibility of data transmission.

After the first data flow on the first link is switched to the second link, congestion of the first link is improved. Optionally, the first network device continues to determine whether a total rate at which the data flows are sent by using the first link is greater than the bandwidth of the first link. If the first network device determines that the total rate at which the data flows are sent by using the first link is still greater than the bandwidth of the first link, the first network device may adjust a second data flow on the first link according to the foregoing implementation of this embodiment of this application.

Optionally, based on the foregoing embodiment, this embodiment of the present invention provides a first optional embodiment of the data traffic processing method.

In this embodiment of this application, after performing first traffic distribution, the first network device further needs to perform determining again to determine whether the first link is still congested. First, the first network device determines whether a second total rate at which the data flows are sent by using the first link is greater than the bandwidth of the first link, where the second total rate indicates a sum of rates at which the first network device sends all data flows other than the first data flow in the plurality of data flows. In other words, the second total rate is a sum of expected rates of all the data flows other than the first data flow on the first link.

When the first network device determines that the second total rate at which the data flows are sent by using the first link is greater than the bandwidth of the first link, the first network device determines a second data flow. The plurality of data flows include the second data flow. A second rate at which the first network device sends the second data flow is less than or equal to a second remaining bandwidth of the second link. Because the first data flow is switched to the second link during the first adjustment, a value of the second remaining bandwidth needs to be equal to a difference between a value of the first remaining bandwidth and a value of the first rate. The first network device may determine, according to an implementation method provided in the foregoing implementation and based on the value of the second remaining bandwidth and a value of a transmission rate of the second data flow, whether to adjust the second data flow to the second link.

The first network device switches the second data flow from the first link to the second link.

In this embodiment of this application, after load balancing is dynamically adjusted for the first time, whether the link is still congested is determined again, in other words, whether the second total rate of the first link is greater than the bandwidth of the link is determined. If the second total rate of the first link is greater than the bandwidth of the link, adjustment continues. This helps further improve link utilization and reduce link congestion.

It may be understood that in this embodiment of this application, in addition to a case in which there are two links, in a case there are a plurality of links, a third data flow may be determined from the first link, and a third rate at which the first network device sends the third data flow is less than or equal to a third remaining bandwidth of a third link.

Optionally, based on the foregoing embodiment, in a second optional embodiment of the data traffic processing method provided in this embodiment of the present invention, if the second total rate at which the data flows are sent by using the first link is greater than the bandwidth of the first link, the first network device may further determine the third data flow, the third rate at which the first network device sends the third data flow is less than or equal to the third remaining bandwidth of the third link, and the third remaining bandwidth indicates an available bandwidth that is in the third link and that is not occupied by a data flow.

This embodiment of this application is similar to the first optional embodiment, to reduce congestion of the first link. When the remaining bandwidth of the second link is less than the transmission rate of the second data flow of the first link, the third link can still receive a distributed data flow of the first link. If the third rate at which the first network device sends the third data flow is less than or equal to the third remaining bandwidth of the third link, it indicates that the third link is capable of receiving the third data flow. It may be understood that in this embodiment of this application, traffic distribution may be performed on the first link provided that there is a remaining bandwidth that can bear a distributed data flow. This helps reduce congestion of the first link and improve bandwidth utilization of a link other than the first link.

Optionally, based on the foregoing embodiments, this embodiment of the present invention provides a third optional embodiment of the data traffic processing method. It should be understood that this embodiment may be applied to the step 102 in the foregoing implementation. Specifically, a security margin γ is introduced into the foregoing determining condition C_{ry} - Rᵢₓ ≥ 0. In this embodiment, introducing the security margin helps avoid congestion after a link receives an adjusted data flow.

With reference to the foregoing descriptions, after the security margin is introduced in this embodiment, the two methods for determining the first data flow and the second link mentioned in the step 102 may be implemented in the following manner: (the first data flow and the second link are used as an example)

In a first manner, when the sum of the transmission rates of all the data flows on the first link is greater than the bandwidth of the link, the first data flow on the first link is determined based on bandwidth of the second link, and the screening condition becomes that the first rate of the first data flow needs to be less than or equal to a sum of the first remaining bandwidth and the security margin.

In a second manner, both the first data flow and the second link are screened out in a permutation and combination mode and by using a screening condition C_{ry} - Rᵢₓ - γ ≥ 0. Specifically, permutation and combination are performed on the transmission rates of all the data flows on the first link and remaining bandwidths of all remaining links, to separately substitute the transmission rates and the remaining bandwidths into C_{ry} - Rᵢₓ - γ ≥ 0, and select Rᵢₓ and C_{ry} that meet a condition as the first data flow and the second link.

A process of determining a link bandwidth in this embodiment of this application is shown by the steps in a fourth embodiment.

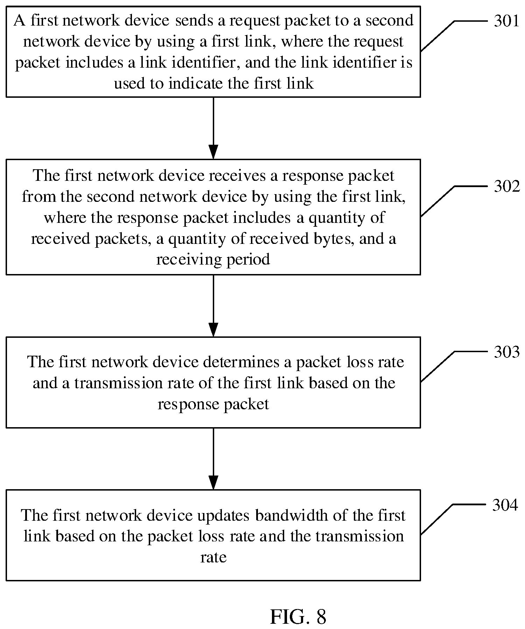

Optionally, based on the foregoing embodiments, a schematic flowchart of a fourth optional embodiment according to the embodiments of the present invention is shown in FIG. 8. FIG. 8 is a schematic flowchart of a link bandwidth detection mechanism.

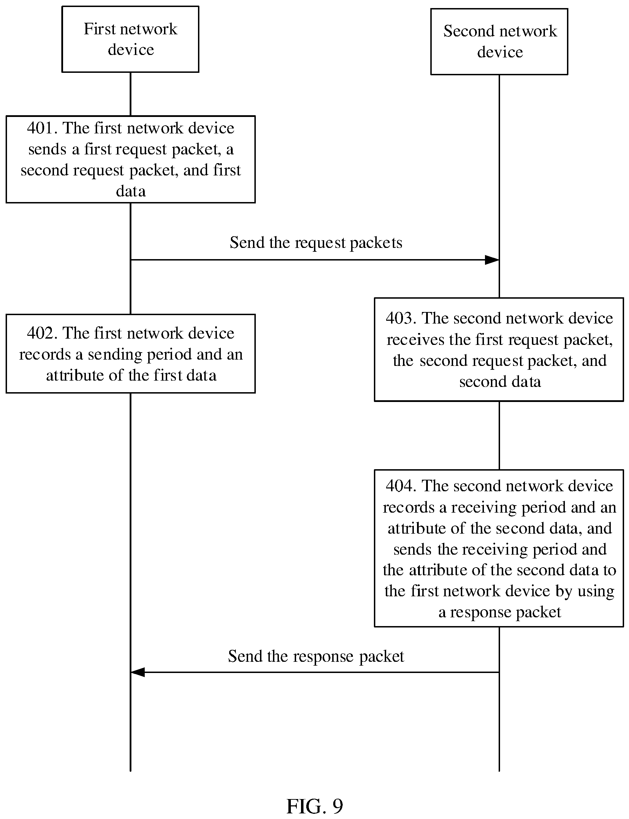

FIG. 9 is a schematic flowchart of interaction between a first network device and a second network device based on FIG. 8.

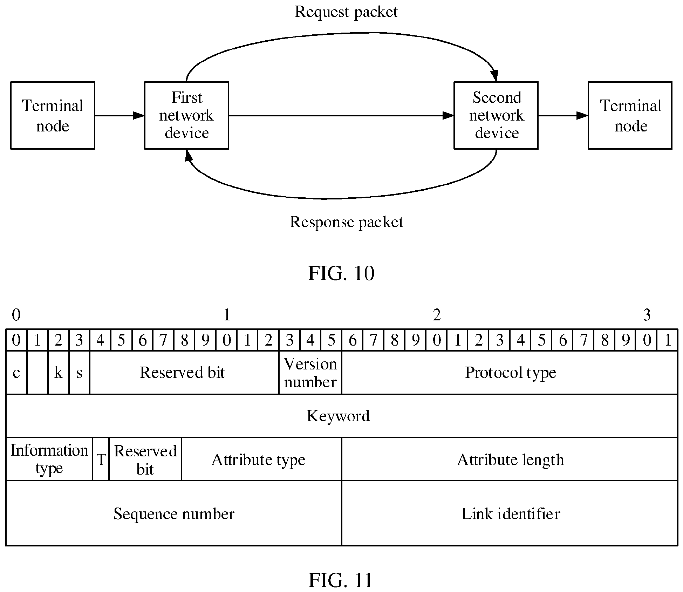

FIG. 10 is a schematic diagram of a control packet used to implement a link bandwidth detection mechanism in a multipath transmission scenario. In the figure, only one path is drawn between a first network device and a second network device, and one path is used as an example to describe a process of the bandwidth detection mechanism. It may be understood that bandwidth of another path between the network devices may also be determined by using the bandwidth detection mechanism. A request packet and a response packet are essentially control packets. The control packets may be used to detect a transmission rate and a packet loss rate of a link in advance, to determine bandwidth of the link.

The following describes a specific process of the link bandwidth detection mechanism with reference to FIG. 8, FIG. 9, and FIG. 10.

As shown in FIG. 8, the following steps are included.

301: A first network device sends a request packet to a second network device by using a first link, where the request packet includes a link identifier, and the link identifier is used to indicate the first link.

The first network device first sends the request packet to the second network device. The request packet is a control packet. A format header of the control packet in this embodiment of this application is different from a format header of a conventional control packet. Referring to FIG. 3 and FIG. 11, a difference lies in that a new attribute type, a new attribute length, and a new attribute value are defined in the new control packet. When the first network device sends only two request packets to the second network device, a newly defined attribute value field may specifically include a link identifier 1. The link identifier is used to identify uniqueness of a link, and a response packet corresponding to the request packet is also returned along an original path based on the link identifier.

As shown in FIG. 11, when the first network device periodically sends a request packet to the second network device, the attribute value field may further include a sequence number i of the packet, and the sequence number is used to identify a sequence of the packet. Specifically, if a sequence number included in a request packet is i, a sequence number of each next request packet is i + 1. Because the request packet includes a sequence number, sequences of request packets are not affected when the request packets are periodically sent.

The following describes in detail with reference to FIG. 9 by using an example in which the first network device sends a first request packet and a second request packet.

Steps 401 and 402 in FIG. 9 may be specifically implemented in the step 301.

401: The first network device sends a first request packet, a second request packet, and first data.

If a time point at which the first network device sends the first request packet is a first time point, and a time point at which the first network device sends the second request packet is a second time point, a time period from the first time point to the second time point is a sending period, and the first data is data sent by the first network device to the second network device in the sending period.

402: The first network device records the sending period and an attribute of the first data.

The attribute includes a total quantity of data packets (pₛᵢ) and a total quantity of bytes (bsi) that are sent by the first network device to the second network device through the path in the sending period. The attribute of the first data is a basis for subsequently calculating a packet loss rate and a transmission rate.

403: The second network device receives the first request packet, the second request packet, and the second data.

If a time point at which the second network device receives the first request packet is a third time point, and a time point at which the second network device receives the second request packet is a fourth time point, a time period from the third time point to the fourth time point is a receiving period, and the second data is data received by the second network device in the receiving period.

The second data received by the second network device may be the same as or different from the first data. If no packet loss occurs in a transmission process, the second data is the first data. If a packet loss occurs, the second data is different from the first data. Information such as a packet loss rate and a transmission rate may be calculated by comparing attributes of the first data and the second data.

404: The second network device records the receiving period and the attribute of the second data, and sends the receiving period and the attribute of the second data to the first network device by using a response packet.

The attribute of the second data includes the quantity of the data packets (pᵣᵢ) and the quantity of the bytes (bri) that are received by the second network device from the first network device in the receiving period. The second network device sends the information such as the receiving period and the attribute of the second data to the first network device by using the response packet.

Still referring to FIG. 8 and FIG. 10, after step 301 in which the first network device sends the request packet to the second network device by using the first link:
302: The first network device receives, by using the first link, the response packet from the second network device, where the response packet includes a quantity of received packets, a quantity of received bytes, and a receiving period, the receiving period indicates a difference between a time point at which the second network device receives the request packet and a time point at which the second network device receives a previous request packet of the request packet, the quantity of the received packets indicates a quantity of data packets received by the second network device in the receiving period, and the quantity of the received bytes indicates a quantity of bytes included in the data packets received by the second network device in the receiving period.

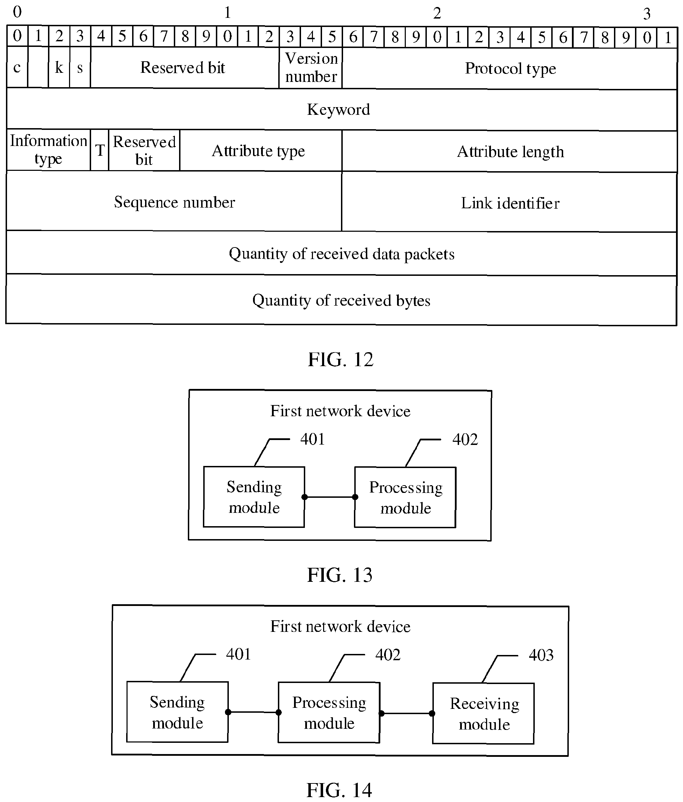

As shown in FIG. 12, the newly defined attribute value in the response packet includes information such as a sequence number i, a link identifier 1, a quantity pᵣᵢ of the data packets received by the second network device, and a quantity bri of the received bytes.

303: The first network device determines a packet loss rate and a transmission rate of the first link based on the response packet.

The first network device may calculate the packet loss rate and the transmission rate based on specific information in the response packet, for example, an attribute of the first data sent by the first network device in the sending period and an attribute of the second data received by the second network device in the receiving period.

304: The first network device updates the bandwidth of the first link based on the packet loss rate and the transmission rate.

The bandwidth of the link may be optimized and updated based on comparison of the packet loss rate and the transmission rate, so that bandwidth utilization of the link is improved, and congestion is also reduced.

In this embodiment of this application, load balancing between network devices may be implemented based on a newly defined control packet format and a link bandwidth detection mechanism. In other words, a delay, a packet loss, and the like of a link can be measured in real time by sending a control packet, to detect a link bandwidth.

Optionally, based on the foregoing embodiments, in a fifth optional embodiment of the data traffic processing method provided in this embodiment of the present invention, the first network device calculates the packet loss rate and the transmission rate according to the following formulas: $Li = \left({p}_{si}-{p}_{ri}\right) / {p}_{si} ,$ and ${R}_{i} = {b}_{ri} / t .$

Lᵢ is the packet loss rate of the data packet on the link in the sending period, Psi is the quantity of the data packets that are sent by the first network device to the second network device in the sending period by using the path, Pri is the quantity of the data packets that are sent by the first network device and that are received by the second network device in the sending period, Rᵢ is a transmission rate of the packet, and t is the receiving period, namely, a time difference between the third time point and the fourth time point.

Optionally, based on the foregoing embodiments, in a sixth optional embodiment of the data traffic processing method provided in this embodiment of the present invention, the first network device updates the bandwidth of the first link based on the packet loss rate and the transmission rate.

Each time the first network device receives a response packet, the first network device may calculate a value of Ri, detect bandwidth C of the link based on the value of Ri, and continuously update C, so that C is closer to a real value. A method is as follows: (Lᵢ ≠ 0 indicates that a packet loss occurs on the link)

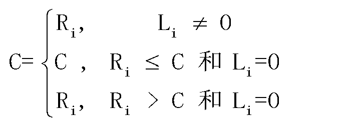

The meaning is as follows:
when the packet loss rate is not zero, or when the packet loss rate is zero and the transmission rate is greater than the bandwidth of the first link, the first network device updates a value of the bandwidth of the first link to a value of the transmission rate; or
when the packet loss rate is zero and the transmission rate is less than or equal to the bandwidth of the first link, the first network device maintains a value of the bandwidth of the first link.

The foregoing embodiments describes the per-flow load balancing mode, which helps improve bandwidth utilization of a link between network devices when a tunnel transmission delay difference is relatively large. When the tunnel transmission delay difference is relatively small, data may be transmitted in a per-packet load balancing mode.

Optionally, based on the foregoing embodiments, in a seventh optional embodiment of the data traffic processing method provided in this embodiment of the present invention:
First, the first network device determines whether a difference between a delay of the first link and a delay of the second link is less than a second threshold. When the first network device determines that the difference between the delay of the first link and the delay of the second link is less than the second threshold, the first network device sends a first data packet to the second network device by using the first link, and sends a second data packet to the second network device by using the second link. The first link and the second link are links separately bound to sequence numbers in corresponding packets.

In this embodiment of this application, whether to use a per-flow load balancing mode or a per-packet load balancing mode may be flexibly determined by determining a delay difference between tunnels. This provides a plurality of possibilities for the solution, so that each load balancing mode can maximize an advantage in different cases, to improve an overall transmission rate.

The following describes a data traffic implementation process in this embodiment of this application from a perspective of a first network device.

The first network device is applied to a hybrid access network, and the first network device includes a processing module 402 and a sending module 401. The first network device provided in this embodiment of this application is shown in FIG. 13.

The sending module 401 is configured to send a plurality of data flows to the second network device by using the first link.

The processing module 402 is configured to determine whether a first total rate at which the data flows are sent by using the first link is greater than bandwidth of the first link, where the first total rate indicates a sum of rates of all of the plurality of data flows sent by the sending module 401.

When determining that the first total rate at which the data flows are sent by using the first link is greater than the bandwidth of the first link, the processing module 402 is further configured to determine a first data flow, where the plurality of data flows include the first data flow, a first rate of the first data flow sent by the sending module 401 is less than or equal to a first remaining bandwidth of the second link, and the first remaining bandwidth indicates an available bandwidth that is in the second link and that is not occupied by the data flow.

The processing module 402 is further configured to switch the first data flow from the first link to the second link.

Based on the embodiment corresponding to FIG. 13, another embodiment of this application includes:
the processing module 402 is further configured to determine whether a second total rate at which the data flows are sent by using the first link is greater than the bandwidth of the first link, where the second total rate indicates a sum of rates of all data flows other than the first data flow in the plurality of data flows sent by the sending module 401;
when the processing module 402 determines that the second total rate at which the data flows are sent by using the first link is greater than the bandwidth of the first link, the processing module 402 is further configured to determine a second data flow, where the plurality of data flows include the second data flow, a second rate of the second data flow sent by the sending module 401 is less than or equal to a second remaining bandwidth of the second link, and the second remaining bandwidth is equal to the first remaining bandwidth minus the first rate; and
the processing module 402 is further configured to switch the second data flow from the first link to the second link.

Based on the embodiment corresponding to FIG. 13, in another embodiment of this application, the first network device is further connected to the second network device by using a third link.

The processing module 402 is further configured to determine whether a second total rate at which the data flows are sent by using the first link is greater than the bandwidth of the first link, where the second total rate indicates a sum of rates of all data flows other than the first data flow in the plurality of data flows sent by the sending module 401.

When the processing module 402 determines that the second total rate at which the data flows are sent by using the first link is greater than the bandwidth of the first link, the processing module 402 is further configured to determine a third data flow, where the plurality of data flows include the third data flow, a third rate of the third data flow sent by the sending module 401 is less than or equal to a third remaining bandwidth of the third link, and the third remaining bandwidth indicates an available bandwidth that is in the third link and that is not occupied by a data flow.

The processing module 402 is further configured to switch the third data flow from the first link to the third link.

Based on the embodiment corresponding to FIG. 13, in another embodiment of this application, that the first rate of the first data flow sent by the sending module 401 is less than or equal to the first remaining bandwidth of the second link specifically includes:
the first rate of the first data flow sent by the sending module 401 is less than or equal to a difference between a value of the first remaining bandwidth and a first threshold, and the first threshold indicates a security value of switching a data flow.

Based on the embodiment corresponding to FIG. 13, another embodiment of this application is shown in FIG. 14. The first network device further includes a receiving module 403.

The sending module 401 is further configured to send a request packet to the second network device by using the first link. The request packet includes a link identifier. The link identifier indicates the first link.

The receiving module 403 is configured to receive, by using the first link, a response packet that is of the request packet and that is from the second network device. The response packet includes a quantity of received packets, a quantity of received bytes, and a receiving period. The receiving period indicates a difference between a time point at which the second network device receives the request packet and a time point at which the second network device receives a previous request packet of the request packet. The quantity of the received packets indicates a quantity of data packets received by the second network device in the receiving period. The quantity of the received bytes indicates a quantity of bytes included in the data packets received by the second network device in the receiving period.

The processing module 402 is further configured to determine a packet loss rate and a transmission rate of the first link based on the response packet.

The processing module 402 is further configured to update the bandwidth of the first link based on the packet loss rate and the transmission rate.

Based on the foregoing embodiments corresponding to FIG. 13 and FIG. 14, in another embodiment of this application, that the processing module 402 determines the packet loss rate and the transmission rate of the first link based on the response packet specifically includes:
the processing module 402 is further configured to determine a quantity of sent packets in a sending period between sending the request packet and sending a previous request packet of the request packet;
the processing module 402 is further configured to determine the packet loss rate based on the quantity of the sent packets and the quantity of the received packets; and
the processing module 402 is further configured to determine the transmission rate based on the quantity of the received bytes and the receiving period.

Based on the foregoing embodiments corresponding to FIG. 13 and FIG. 14, in another embodiment of this application, that the processing module 402 updates the bandwidth of the first link based on the packet loss rate and the transmission rate specifically includes:
the processing module 402 is further configured to update a value of the bandwidth of the first link to a value of the transmission rate when the packet loss rate is not zero, or when the packet loss rate is zero and the transmission rate is greater than the bandwidth of the first link; and
the processing module 402 is further configured to maintain the value of the bandwidth of the first link when the packet loss rate is zero and the transmission rate is less than or equal to the bandwidth of the first link.

Based on the embodiments corresponding to FIG. 13 and FIG. 14, another embodiment of this application includes:
the processing module 402 is further configured to determine whether a difference between a delay of the first link and a delay of the second link is less than a second threshold; and
when the processing module 402 determines that the difference between the delay of the first link and the delay of the second link is less than the second threshold, the sending module 401 is further configured to send a first data packet to the second network device by using the first link and send a second data packet to the second network device by using the second link, where the first data flow includes the first data packet and the second data packet.

It may be understood that internal modules of the second network device in this embodiment of this application are similar to those included in FIG. 13, FIG. 14, and the corresponding embodiments. Details are not described herein again.

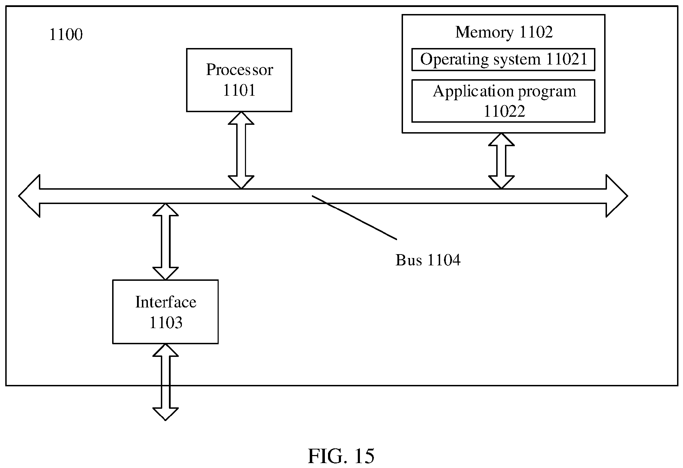

FIG. 15 is a schematic diagram of a hardware structure of a first network device 1100 according to an embodiment of this application. The first network device 1100 shown in FIG. 15 may perform corresponding steps performed by the first network device in the method in the foregoing embodiment.

As shown in FIG. 15, the first network device 1100 includes a processor 1101, a memory 1102, an interface 1103, and a bus 1104. The interface 1103 may be implemented in a wireless or wired manner, and may be specifically a network adapter. The processor 1101, the memory 1102, and the interface 1103 are connected through the bus 1104.

The interface 1103 may specifically include a transmitter and a receiver, and is used by the first network device to receive information from and send information to the second network device in the foregoing embodiment. For example, the interface 1103 is configured to support sending of a data flow to the second network device. For example, the interface 1103 is configured to support the process S101 in FIG. 5. The processor 1101 is configured to perform processing performed by the first network device in the foregoing embodiment. For example, the processor 1101 is configured to: determine whether a first total rate at which data flows are sent by using the first link is greater than bandwidth of the first link; determine a first data flow; switch the first data flow from the first link to the second link; and/or perform another process in the technology described in this specification. The memory 1102 includes an operating system 11021 and an application program 11022, and is configured to store a program, code, or an instruction. When executing the program, code, or instruction, the processor or a hardware device may complete a processing process of the first network device in the foregoing method embodiment. Optionally, the memory 1102 may include a read-only memory (English: Read-only Memory, ROM for short) and a random access memory (English: Random Access Memory, RAM for short). The ROM includes a basic input/output system (English: Basic Input/Output System, BIOS for short) or an embedded system, and the RAM includes an application program and an operating system. When the first network device 1100 needs to run, a bootloader in the BIOS or the embedded system that is built into the ROM is used to boot a system to start, and boot the first network device 1100 to enter a normal running state. After entering the normal running state, the first network device 1100 runs the application program and the operating system in the RAM, to complete the processing processes related to the first network device in the method embodiment.

It may be understood that FIG. 15 shows only a simplified design of the first network device 1100. In actual application, the first network device may include any quantity of interfaces, processors, or memories.

In addition, an embodiment of this application provides a computer storage medium, configured to store a computer software instruction used by the foregoing first network device. The computer software instruction includes a program designed for performing the foregoing method embodiment.

An embodiment of this application further includes a data traffic processing system. The data traffic processing system includes a first network device and a second network device. The first network device is the first network device in FIG. 13, FIG. 14, or FIG. 15.

Method or algorithm steps described in combination with the content disclosed in this application may be implemented by hardware, or may be implemented by a processor by executing a software instruction. The software instruction may be formed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and beneficial effects of this application are further described in detail in the foregoing specific implementations. It should be understood that the foregoing descriptions are merely specific implementations of this application.

## Claims

1. A data traffic processing method, wherein the data traffic processing method is applied to a hybrid access network, the hybrid access network comprises a first network device and a second network device, the first network device is connected to the second network device by using a first link and a second link, and the method comprises:
determining, by the first network device, whether a first total rate at which data flows are sent by using the first link is greater than bandwidth of the first link, wherein the first network device sends a plurality of data flows to the second network device by using the first link, and the first total rate indicates a sum of rates at which the first network device sends all of the plurality of data flows;
determining, by the first network device, a first data flow when determining that the first total rate at which the data flows are sent by using the first link is greater than the bandwidth of the first link, wherein the plurality of data flows comprise the first data flow, a first rate at which the first network device sends the first data flow is less than or equal to a first remaining bandwidth of the second link, and the first remaining bandwidth indicates an available bandwidth that is in the second link and that is not occupied by a data flow; and
switching, by the first network device, the first data flow from the first link to the second link.

2. The method according to claim 1, wherein the method further comprises:
determining, by the first network device, whether a second total rate at which the data flows are sent by using the first link is greater than the bandwidth of the first link, wherein the second total rate indicates a sum of rates at which the first network device sends all data flows other than the first data flow in the plurality of data flows;
determining, by the first network device, a second data flow when determining that the second total rate at which the data flows are sent by using the first link is greater than the bandwidth of the first link, wherein the plurality of data flows comprise the second data flow, a second rate at which the first network device sends the second data flow is less than or equal to a second remaining bandwidth of the second link, and a value of the second remaining bandwidth is equal to a difference between a value of the first remaining bandwidth and a value of the first rate; and
switching, by the first network device, the second data flow from the first link to the second link.

3. The method according to claim 1, wherein the first network device is also connected to the second network device by using a third link, and the method further comprises:
determining, by the first network device, whether a second total rate at which the data flows are sent by using the first link is greater than the bandwidth of the first link, wherein the second total rate indicates a sum of rates at which the first network device sends all data flows other than the first data flow in the plurality of data flows;
determining, by the first network device, a third data flow when determining that the second total rate at which the data flows are sent by using the first link is greater than the bandwidth of the first link, wherein the plurality of data flows comprise the third data flow, a third rate at which the first network device sends the third data flow is less than or equal to a third remaining bandwidth of the third link, and the third remaining bandwidth indicates an available bandwidth that is in the third link and that is not occupied by a data flow; and
switching, by the first network device, the third data flow from the first link to the third link.

4. The method according to any one of claims 1 to 3, wherein that the first rate at which the first network device sends the first data flow is less than or equal to the first remaining bandwidth of the second link comprises:
the first rate at which the first network device sends the first data flow is less than or equal to a difference between the value of the first remaining bandwidth and a first threshold, wherein the first threshold indicates a security value of switching a data flow.

5. The method according to any one of claims 1 to 4, wherein the method further comprises:
sending, by the first network device, a request packet to the second network device by using the first link, wherein the request packet comprises a link identifier, and the link identifier indicates the first link;
receiving, by the first network device by using the first link, a response packet that is of the request packet and that is from the second network device, wherein the response packet includes a quantity of received packets, a quantity of received bytes, and a receiving period, the receiving period indicates a difference between a time point at which the second network device receives the request packet and a time point at which the second network device receives a previous request packet of the request packet, the quantity of the received packets indicates a quantity of data packets received by the second network device in the receiving period, and the quantity of the received bytes indicates a quantity of bytes comprised in the data packets received by the second network device in the receiving period;
determining, by the first network device, a packet loss rate and a transmission rate of the first link based on the response packet; and
updating, by the first network device, the bandwidth of the first link based on the packet loss rate and the transmission rate.

6. The method according to claim 5, wherein the determining, by the first network device, a packet loss rate and a transmission rate of the first link based on the response packet comprises:
determining, by the first network device, a quantity of sent packets in a sending period between sending the request packet and sending a previous request packet of the request packet;
determining, by the first network device, the packet loss rate based on the quantity of the sent packets and the quantity of the received packets; and
determining, by the first network device, the transmission rate based on the quantity of the received bytes and the receiving period.

7. The method according to claim 5 or 6, wherein the updating, by the first network device, the bandwidth of the first link based on the packet loss rate and the transmission rate comprises:
updating, by the first network device, a value of the bandwidth of the first link to a value of the transmission rate when the packet loss rate is not zero, or when the packet loss rate is zero and the transmission rate is greater than the bandwidth of the first link; or
maintaining, by the first network device, a value of the bandwidth of the first link when the packet loss rate is zero and the transmission rate is less than or equal to the bandwidth of the first link.

8. The method according to any one of claims 5 to 7, wherein the request packet further comprises a sequence number, the sequence number indicates the request packet, and the response packet comprises the sequence number.

9. The method according to any one of claims 1 to 8, wherein the method further comprises:
determining, by the first network device, whether a difference between a delay of the first link and a delay of the second link is less than a second threshold; and
when determining that the difference between the delay of the first link and the delay of the second link is less than the second threshold, sending, by the first network device, a first data packet to the second network device by using the first link, and sending a second data packet to the second network device by using the second link, wherein the first data flow comprises the first data packet and the second data packet.

10. The method according to any one of claims 1 to 9, wherein
the first network device is a home gateway HG device, and the second network device is a hybrid access aggregation point HAAP device; or
the first network device is an HAAP device, and the second network device is an HG device.

11. A first network device, wherein the first network device is applied to a hybrid access network, the hybrid access network further comprises a second network device, the first network device is connected to the second network device by using a first link and a second link, and the first network device comprises a processing module and a sending module;
the sending module is configured to send a plurality of data flows to the second network device by using the first link;
the processing module is configured to determine whether a first total rate at which the data flows are sent by using the first link is greater than bandwidth of the first link, wherein the first total rate indicates a sum of rates of all of the plurality of data flows sent by the sending module;
when determining that the first total rate at which the data flows are sent by using the first link is greater than the bandwidth of the first link, the processing module is further configured to determine a first data flow, wherein the plurality of data flows comprise the first data flow, a first rate of the first data flow sent by the sending module is less than or equal to a first remaining bandwidth of the second link, and the first remaining bandwidth indicates an available bandwidth that is in the second link and that is not occupied by the data flow; and
the processing module is further configured to switch the first data flow from the first link to the second link.

12. The first network device according to claim 11, wherein
the processing module is further configured to determine whether a second total rate at which the data flows are sent by using the first link is greater than the bandwidth of the first link, wherein the second total rate indicates a sum of rates of all data flows other than the first data flow in the plurality of data flows sent by the sending module;
when determining that the second total rate at which the data flows are sent by using the first link is greater than the bandwidth of the first link, the processing module is further configured to determine a second data flow, wherein the plurality of data flows comprise the second data flow, the second rate of the second data flow sent by the sending module is less than or equal to a second remaining bandwidth of the second link, and a value of the second remaining bandwidth is equal to a difference between a value of the first remaining bandwidth and a value of the first rate; and
the processing module is further configured to switch the second data flow from the first link to the second link.

13. The first network device according to claim 11, wherein the first network device is connected to the second network device by using a third link;
the processing module is further configured to determine whether a second total rate at which the data flows are sent by using the first link is greater than the bandwidth of the first link, wherein the second total rate indicates a sum of rates of all data flows other than the first data flow in the plurality of data flows sent by the sending module;
when determining that the second total rate at which the data flows are sent by using the first link is greater than bandwidth of the first link, the processing module is further configured to determine a third data flow, wherein the plurality of data flows comprise the third data flow, a third rate of the third data flow sent by the sending module is less than or equal to a third remaining bandwidth of the third link, and the third remaining bandwidth indicates an available bandwidth that is in the third link and that is not occupied by a data flow; and
the processing module is further configured to switch the third data flow from the first link to the third link.

14. The first network device according to any one of claims 11 to 13, wherein that the first rate of the first data flow sent by the sending module is less than or equal to the first remaining bandwidth of the second link specifically comprises:
the first rate of the first data flow sent by the sending module is less than or equal to a difference between the value of the first remaining bandwidth and a first threshold, and the first threshold indicates a security value of switching a data flow.

15. The first device according to any one of claims 11 to 14, wherein the first network device further comprises a receiving module;
the sending module is further configured to send a request packet to the second network device by using the first link, wherein the request packet comprises a link identifier, and the link identifier indicates the first link;
the receiving module is configured to receive, by using the first link, a response packet that is of the request packet and that is from the second network device, wherein the response packet includes a quantity of received packets, a quantity of received bytes, and a receiving period, the receiving period indicates a difference between a time point at which the second network device receives the request packet and a time point at which the second network device receives a previous request packet of the request packet, the quantity of the received packets indicates a quantity of data packets received by the second network device in the receiving period, and the quantity of the received bytes indicates a quantity of bytes comprised in the data packets received by the second network device in the receiving period;
the processing module is further configured to determine a packet loss rate and a transmission rate of the first link based on the response packet; and
the processing module is further configured to update the bandwidth of the first link based on the packet loss rate and the transmission rate.

16. The first network device according to claim 15, wherein that the processing module determines the packet loss rate and the transmission rate of the first link based on the response packet specifically comprises:
the processing module is further configured to determine a quantity of sent packets in a sending period between sending the request packet and sending the previous request packet of the request packet;
the processing module is further configured to determine the packet loss rate based on the quantity of the sent packets and the quantity of the received packets; and
the processing module is further configured to determine the transmission rate based on the quantity of the received bytes and the receiving period.

17. The first network device according to claim 15 or 16, wherein that the processing module updates the bandwidth of the first link based on the packet loss rate and the transmission rate specifically comprises:
the processing module is further configured to update a value of the bandwidth of the first link to a value of the transmission rate when the packet loss rate is not zero, or when the packet loss rate is zero and the transmission rate is greater than the bandwidth of the first link; and
the processing module is further configured to maintain the value of the bandwidth of the first link when the packet loss rate is zero and the transmission rate is less than or equal to the bandwidth of the first link.

18. The first network device according to any one of claims 11 to 17, wherein the first network device comprises:
the processing module is further configured to determine whether a difference between a delay of the first link and a delay of the second link is less than a second threshold; and
when the processing module determines that the difference between the delay of the first link and the delay of the second link is less than the second threshold, the sending module is further configured to send a first data packet to the second network device by using the first link and send a second data packet to the second network device by using the second link, wherein the first data flow comprises the first data packet and the second data packet.

19. A data traffic processing system, wherein the data traffic processing system comprises a first network device and a second network device, the first network device is the first network device according to any one of claims 11 to 18.
